# EUROPÄISCHE PATENTSCHRIFT

(11) **EP 3 877 682 B1**
(45) Veröffentlichungstag und Bekanntmachung des Hinweises auf die Patenterteilung: **04.12.2024**
(21) Anmeldenummer: 19805883.6
(22) Anmeldetag: 10.10.2019
(51) Int. Cl.: F16K 27/00

(54) **VORRICHTUNG ZUR BEFÜLLUNG VON BEHÄLTERN MIT BETRIEBSSTOFFEN AN MONTAGELINIEN DER AUTOMOBILINDUSTRIE**
DEVICE FOR FILLING CONTAINERS WITH SERVICE FLUIDS ON ASSEMBLY LINES OF THE AUTOMOTIVE INDUSTRY
DISPOSITIF POUR LE REMPLISSAGE DE RÉCIPIENTS AVEC DES COMBUSTIBLES SUR DES LIGNES DE MONTAGE DE L'INDUSTRIE AUTOMOBILE

(30) Priorität: 08.11.2018 DE 102018008848
(43) Veröffentlichungstag der Anmeldung: 15.09.2021
(73) Patentinhaber: Dürr Somac GmbH, 09366 Stollberg (DE)
(72) Erfinder: ACHATZ, Thomas, 09366 Niederdorf (DE); WIELAND, Frank, 09235 Burkhardtsdorf (DE); SELBMANN, Eric, 09355 Gersdorf (DE); REDETZKY, Jan, 09244 Lichtenau (DE); BRÄUNLICH, Thomas, 09337 Hohenstein-Ernstthal (DE); ULLMANN, Christian, 08297 Zwönitz (DE)
(74) Vertreter: Findeisen Neumann Scheit Partnerschaft mbB
(86) Internationale Anmeldenummer: PCT/DE2019/000262
(87) Internationale Veröffentlichungsnummer: WO 2020/094164

(56) Entgegenhaltungen:
- EP-A1- 0 442 033
- EP-A2- 1 524 437
- WO-A1-2017/193364
- DE-A1- 102006 020 277
- DE-A1- 102015 009 290

## Beschreibung

Die Erfindung betrifft eine Befüllanlage zur Befüllung von Behältern von Fahrzeugen mit Betriebsstoffen an Montagelinien der Automobilindustrie, wobei die Befüllanlage spezifisch ausgestaltete Befülladapter und eine Vorrichtung mit einer Blockstruktur aufweist, wobei die flüssigen oder gasförmigen Betriebsstoffe mit den Befülladaptern den jeweils konkret zu befüllenden Behältern des Fahrzeuges zugeführt werden und wobei mehrere der für einen in der Befüllanlage örtlich und funktionell kapselbaren Prozess der Befüllung notwendigen elektronischen, elektrischen, pneumatischen und hydraulischen Baugruppen in einer gemeinsamen Blockstruktur der Vorrichtung baulich integriert sind.

Für verschiedenartige technische Anwendungen müssen Flüssigkeiten und/oder Gase zeitlich und mengenmäßig definiert einer gerätetechnischen Anordnung zugeführt werden. Ein diesbezüglich typisches Anwendungsgebiet sind Kraftfahrzeuge, für die eine Befüllung von Gehäusen, Kreisläufen, Ausgleichbehältern und dergleichen mit Kraft-, Schmier-, Kühl- und sonstigen Betriebsstoffen notwendig ist. So wird im Herstellungsprozess an den Montagelinien der Automobilindustrie beispielsweise Öl, Kühlflüssigkeit, Kältemittel, Scheibenreiniger und Kraftstoff befüllt. Die Befüllanlagen umfassen dabei als wesentliche Komponenten eine Vakuumquelle, eine Befüllquelle mit Druckregelung, einen Medientank mit Füllstandmessung, Vakuumstrecken, Füllstrecken, Rücksaugstrecken, Schnüffelstrecken, Nachfüllstrecken, eine Volumenmessung, eine Füllstandmessung, eine Druck- und Vakuummessung, Software, pneumatische und hydraulische Betriebsmittel sowie Steuer- und Medienleitungen in Form von Rohren, Schläuchen und metallischen Leitungen.

Der Füllprozess ist bedingt durch Anforderungen einer Fließbandfertigung an Montagelinien örtlich aufgeteilt in
- Funktionen, die nahe am Fahrzeug ablaufen müssen (mitfahrende Konsole, Adapter)
- Funktionen die Hilfsprozesse nahe am Fahrzeug leisten
- Funktionen, die Hilfsprozesse im Bereich der stationären Grundeinheit leisten

Die Befüllung mit den Betriebsstoffen erfolgt üblicherweise durch einen Werker. Der Werker bringt dabei Befülladapter, die über Schlauchpakete mit einer Befüllanlage verbunden sind, zum Fahrzeug und adaptiert sie an die zu befüllenden Fahrzeugbehälter.

Um Bauraum und Gewicht der für die Befüllung notwendigen Gerätetechnik zu reduzieren, wird beispielsweise in DE 195 11 395A1 und DE 20 2006 015 673 U1 vorgeschlagen, mehrere verschiedene Ventilfunktionen durch nebeneinander liegende Ventilmodule in Form eines Blockdesigns baulich miteinander zu integrieren.

Mit Bezug auf derartige Lösungsvorschläge ist es für den Fachmann an sich naheliegend, zur Befüllung von Behältern mit Betriebsstoffen an Montagelinien der Automobilindustrie eine kompakte Baueinheit als Blockstruktur zu schaffen, die mit ihren integrierten Baugruppen neben den Ventilfunktionen für die Pneumatik- und/oder Hydraulikventile auch weitere für den Befüllvorgang notwendige Funktionen aufnimmt. Solche Funktionen sind primär die für einen in der Befüllanlage örtlich und/oder funktionell kapselbaren Befüllprozess notwendigen elektronischen, elektrischen, pneumatischen und hydraulischen Baugruppen mit Firmware, Busschnittstellen, Sensorelementen, Anzeigen, Steuerungskomponenten und dergleichen. Obwohl eine solche Ausgestaltung aus dem Stand der Technik vermeintlich nahegelegt wird, sind am Markt bisher keine tatsächlich realisierten Lösungen verfügbar. So beschreibt DE 10 2006 020 277 A1 einen Druckverteiler für pneumatische Aktoren in Sitzen, bei dem in einem Grundkörper eine Baugruppe mit Ventilen und eine Steuerschaltung befestigt sind. Diese drei Baugruppen sind jeweils als eine separate Baugruppe gefertigt und werden zu einer funktionell in Wirkverbindung stehenden gemeinsamen Baugruppe ähnlich einer Blockstruktur montiert.

Aus EP 0 442 033 A1 ist eine Ventilbaugruppe in Blockbauweise bekannt, die durch eine Montage von separaten Zwischenplatten mit jeweils unterschiedlichen Durchgangsöffnungen auf die für konkrete Anwendungen notwendigen Strömungskonturen modifiziert werden kann. Ein ähnlicher Lösungsansatz wird in EP 1 524 437 A2 vorgeschlagen, wobei hier bei einer Ventilbaugruppe in Blockbauweise zwischen zwei Blocksegmenten eine Rasterplatte zur Funktionsdifferenzierung der gewünschten Strömungsverläufe angeordnet ist.

WO2017193364A1 offenbart eine Befüllanlage zur Befüllung von Behältern von Fahrzeugen mit Betriebsstoffen.

Aufgabe der Erfindung ist es daher, eine Befüllanlage mit einer Blockstruktur zu schaffen, die modulartig aufgebaut ist und möglichst nur Änderungen an einem einzigen der hierfür konzipierten Module erfordert,

Die Aufgabe wird gelöst, indem die Blockstruktur eine Hydraulikebene, eine Montageebene und eine Elektronikebene aufweist, die jeweils als eine separate Baugruppe gefertigt und als eine funktionell in Wirkverbindung stehende gemeinsame Baugruppe miteinander montiert sind. Die Hydraulikebene weist einen quaderförmigen Grundkörper auf, in dessen Innenraum die für eine jeweils konkrete Adaption spezifisch ausgebildeten Kanalstrukturen zur Führung von Betriebsstoffen ausgestaltet sind, in dessen unteren Abschnitt eine Vielzahl von ersten Ausnehmungen ausgestaltet ist, die jeweils horizontal ausgerichtet und senkrecht zur Längsrichtung des Grundkörpers sowie jeweils paarweise vertikal übereinander liegend angeordnet sind, wobei jede Ausnehmung auf ihrem zum Innenraum des Grundkörpers gerichteten Abschnitt eine Strömungsverbindung zu einer der im Innenraum ausgestalteten Kanalstrukturen aufweist, wobei jede Ausnehmung auf ihrem zur Außenseite des Grundkörpers gerichteten Abschnitt einen offenen Kanal als Strömungsverbindung zu einem Blockventil aufweist, wobei die jeweils paarweise übereinander liegenden Ausnehmungen mit jeweils einem Blockventil in Wirkverbindung bringbar sind und wobei oberhalb der ersten Ausnehmungen weitere Ausnehmungen ausgestaltet sind zur Aufnahme von Betätigungselementen für die Kanalstrukturen und Blockventile. Die Montageebene weist eine rechteckförmige Grundplatte auf, in deren unteren Abschnitt eine Vielzahl von ersten Durchgangsöffnungen ausgestaltet Ist, die jeweils horizontal ausgerichtet und senkrecht zur Längsrichtung der Grundplatte sowie jeweils paarweise vertikal übereinander liegend angeordnet sind und deren Anordnung und geometrische Form kongruent ist zu den im unteren Abschnitt des quaderförmigen Grundkörpers der Hydraulikebenen ausgestalteten ersten Ausnehmungen, wobei über diesen ersten Durchgangsöffnungen mehrere zweite Durchgangsöffnungen ausgestaltet sind, deren Anordnung und geometrische Form kongruent ist zu den im quaderförmigen Grundkörper der Hydraulikebene oberhalb der ersten Ausnehmungen ausgestalteten weiteren Ausnehmungen und wobei im oberen Abschnitt eine Vielzahl von dritten Durchgangsöffnungen ausgestaltet ist, die in ihrer Gesamtheit ein Lochraster ausbilden. Die Elektronikebene weist eine rechteckförmige Grundplatte auf, in deren Grundfläche Ausnehmungen und Durchgangsöffnungen ausgestaltet sind, die jeweils horizontal ausgerichtet und senkrecht zur Längsrichtung der Grundplatte angeordnet sind und in denen die Betätigungselemente für die in der Hydraulikebene ausgestalteten Kanalstrukturen und die mittels der Montagebene in der Hydraulikebene gelagerten Blockventile abstützbar sind.

Die Grundidee der Erfindung besteht also darin, eine Blockstruktur für eine Befüllanlage aus drei verschiedenen Grundelementen aufzubauen. Somit wird eine Blockstruktur für eine Befüllanlage verfügbar, die modulartig aufgebaut ist und lediglich Änderungen an der Hydraulikebene als einzigem der insgesamt drei Module erfordert, um die Blockstruktur für verschiedenartige Befüllprozesse zu modifizieren. Durch die konkrete Ausführung der Strömungskanäle im Innenraum der Hydraulikebene wird die Funktionalität bestimmt. Die Montageebene und die Elektronikebene erfordern hingegen keine Änderungen. Für eine derartige kompakte und modulierbare Blockstruktur mit - wie bekannt - pneumatischen sowie in neuartiger Weise auch hydraulischen und fluidischen Komponenten ergeben sich zahlreiche Einsatzmöglichkeiten, wobei eine bauliche Integration sowohl in eine an der Montagelinie mitfahrenden Konsole als auch in eine ortsfeste Grundeinheit einer Befüllanlage der Automobilindustrie möglich ist.

Die Hydraulikebene realisiert funktionell die Medienverteilung und verbindet über die im quaderförmigen Grundkörper ausgestalteten Kanalstrukturen die mit den zu befüllenden Betriebsstoffen (z.B. Öl, Kühlflüssigkeit, Kältemittel) beaufschlagten Eingangsstrecken mit den in der Montageebene abgestützten Ventilen. Die Hydraulikebene bildet somit über die konkrete hydraulische Verschaltung den gesamten Befüllprozess ab. Folglich kann mit einer Änderung der Kanalstrukturen im Innenraum des quaderförmigen Grundkörpers dieser Hydraulikebene die Vorrichtung und somit die gesamte Befüllanlage für unterschiedliche Anwendungen modifiziert werden. Hierfür sind in vorteilhafter Weise keine konstruktiven Änderungen an der Montageebene und der Elektronikebene notwendig. Stattdessen müssen in deren Ausnehmungen und Durchgangsöffnungen lediglich die für eine jeweils konkrete Befüllaufgabe notwendigen Bauelemente (handelsübliche Ventile, Steuerungselemente und dergleichen) eingesetzt bzw. nicht benötigte Anschlüsse bei Notwendigkeit mit Blindstutzen und ähnlichen Bauteilen verschlossen werden. Die derart ausgestattete Hydraulikebene wird in der zugeordneten Befüllanlage fest verschraubt und die hydraulische Verbindung erfolgt vorzugsweise über Steckhülsen.

Die Montageebene realisiert funktionell die Aufnahme von Ventilbaugruppen, Dichtungen, Elektronik, Sensoren und Blindstutzen. Dabei werden die Blindstutzen in Abhängigkeit der konkreten Befüllaufgabe alternativ offen oder geschlossen betrieben. Die Montageebene wird vorzugsweise komplett bestückt mittels einer Schraubverbindung an der Hydraulikebene montiert bzw. von dieser demontiert. Somit sind sowohl die Herstellung als auch die im späteren Nutzungszyklus notwendigen Wartungen in einfacher Art und Weise zu realisieren.

Die Elektronikebene stellt funktionell eine Kommunikationsschnittstelle CAN zu analoger Sensorik und Ventiltechnik dar. Hiermit erfolgt die elektrische Anbindung von Ventilen, Drucksensoren, Temperaursensoren, der Steuerung für den Befülladapter und eventuell weiterer zusätzlicher Komponenten.

Die aus jeweils Hydraulikebene, Montageebene und Elektronikebene zusammengefügten Blockstrukturen sind nach medienspezifischen Eigenschaften und lokalen und funktionellen Anforderungen gegliedert. Dadurch ergeben sich gegenüber bisher bekannten Varianten mehrere Vorteile, von denen insbesondere zu nennen sind:
- kleinere Befüllanlagen
- weniger Gewicht
- Reduzierung von Material
- Reduzierung von Leckstellen
- höhere integrierte Funktionalität
- neue Features, Funktionen und Verbesserungen von Diagnose, Wartung und Standzeit Vorteilhafte Ausgestaltungen sind Gegenstand von Unteransprüchen, deren technische Merkmale nachfolgend in einem Ausführungsbeispiel anhand der Zeichnung beschrieben werden. Es zeigen:
   Fig. 1 die Hydraulikebene einer Blockstruktur einer erfindungsgemäßen Befüllanlage
   Fig. 2 die Montageebene der Blockstruktur
   Fig. 3 die Elektronikebene der Blockstruktur
   Fig. 4 eine Halteplatte (hier perspektivisch) für die Elektronikebene
   Fig. 5 eine mit Sensoren bestückte Baugruppe
   Fig. 6 ein Bauteil
   Fig. 7 eine teilweise montierte Blockstruktur
   Fig. 8 eine vollständig montierte Blockstruktur

Die in der Zeichnung dargestellte Blockstruktur ist als eine Baugruppe für eine Vorrichtung einer Befüllanlage zur Befüllung von Behältern mit Betriebsstoffen an Montagelinien der Automobilindustrie konzipiert. Dabei werden die flüssigen oder gasförmigen Betriebsstoffe mit einer Befüllanlage durch spezifisch ausgestaltete Befülladapter den jeweils konkret zu befüllenden Behältern des Fahrzeuges zugeführt. Mehrere der für einen in der Befüllanlage örtlich und funktionell kapselbaren Befüllprozess notwendigen elektronischen, elektrischen, pneumatischen und hydraulischen Baugruppen sind in einer gemeinsamen Blockstruktur baulich integriert.

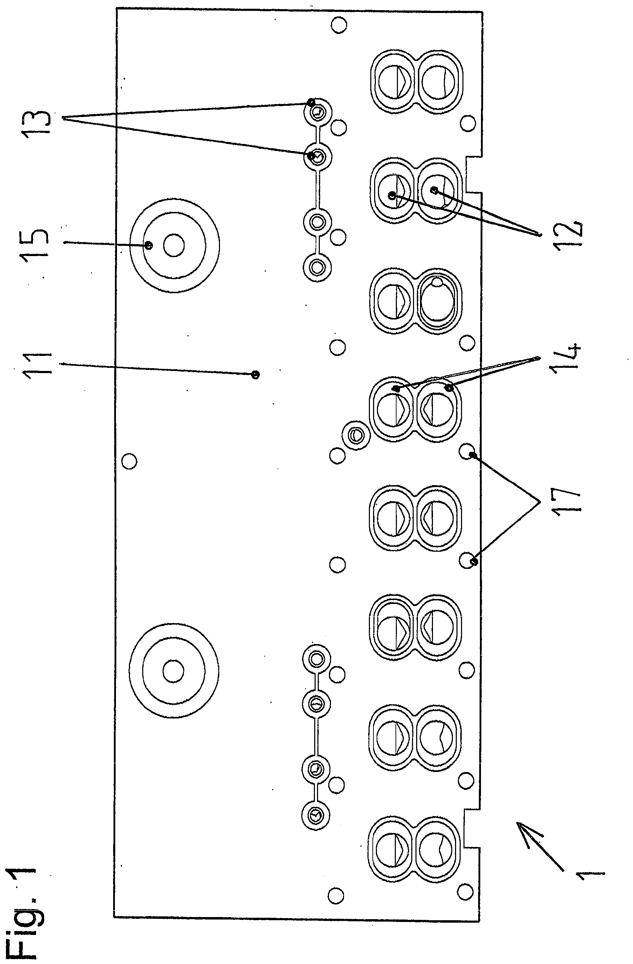

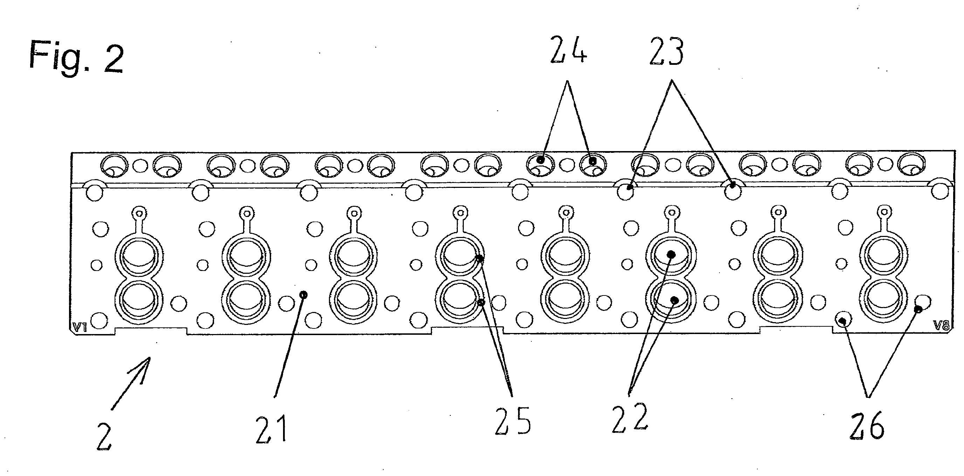

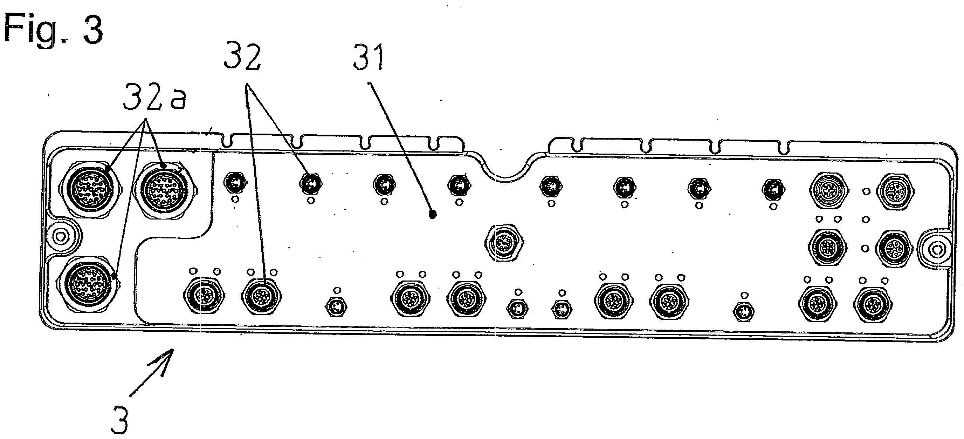

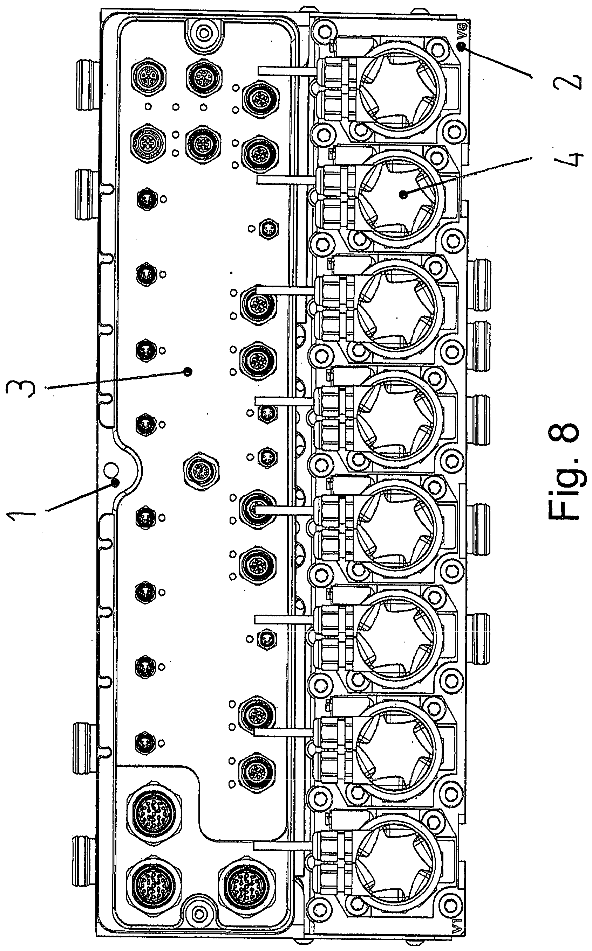

Die Blockstruktur weist eine Hydraulikebene 1 (Fig. 1), eine Montageebene 2 (Fig. 2) und eine Elektronikebene 3 (Fig. 3) auf. Hydraulikebene 1, Montageebene 2 und Elektronikebene 3 sind jeweils als eine separate Baugruppe gefertigt und werden gemäß Fig. 8 als eine funktionell in Wirkverbindung stehende gemeinsame Baugruppe miteinander montiert.

Aus Fig. 8 ist ersichtlich, dass Hydraulikebene 1, Montageebene 2 und Elektronikebene 3 jeweils eine gleiche Länge aufweisen. Außerdem ist ersichtlich, dass die Montagebene 2 und die Elektronikebene 3 jeweils eine hälftige Höhe wie die Hydraulikebene 1 aufweisen. Weiterhin ist aus Fig. 8 ersichtlich, dass nach Montage zur funktionsfähigen Blockstruktur die Montagebene 2 im unteren Abschnitt der zugeordneten Seitenfläche der Hydraulikebene 1 und die Elektronikebene 3 im oberen Abschnitt der zugeordnete Seitenfläche der Hydraulikebene 1 angeordnet ist.

Die Hydraulikebene 1 weist einen quaderförmigen Grundkörper 11 auf. Im Innenraum des Grundkörpers 11 sind für die konkrete Adaption spezifisch ausgebildeten Kanalstrukturen (in der Zeichnung nicht dargestellt) zur Führung von Betriebsstoffen ausgestaltet. Weiterhin ist im unteren Abschnitt des Grundkörpers 11 eine Vielzahl von ersten Ausnehmungen 12 ausgestaltet, Die Ausnehmungen 12 sind jeweils horizontal ausgerichtet und senkrecht zur Längsrichtung des Grundkörpers 11 sowie jeweils paarweise vertikal übereinander liegend angeordnet. Jede Ausnehmung 12 weist auf ihrem zum Innenraum des Grundkörpers 11 gerichteten Abschnitt eine Strömungsverbindung (in der Zeichnung nicht dargestellt) zu einer der im Innenraum ausgestalteten Kanalstrukturen auf. Außerdem weist jede Ausnehmung 12 auf ihrem zur Außenseite des Grundkörpers 11 gerichteten Abschnitt einen offenen Kanal als Strömungsverbindung zu einem Blockventil 4 auf. Dabei können jeweils paarweise übereinander liegende Ausnehmungen 12 mit jeweils einem Blockventil 4 in Wirkverbindung gebracht werden. Oberhalb der ersten Ausnehmungen 12 sind weitere Ausnehmungen 13 ausgestaltet, in denen Betätigungselemente (in der Zeichnung nicht dargestellt) für die Kanalstrukturen im Innenraum 11 und für die Blockventile 4 angeordnet werden können.

Am Umfang der jeweils paarweise vertikal übereinander liegend angeordneten ersten Ausnehmungen 12 sowie am Umfang der oberhalb davon angeordneten weiteren Ausnehmungen 13 sind am Grundkörper 11 der Hydraulikebene 1 jeweils kreisförmige Vertiefungen 14 zur Aufnahme von Dichtelementen (in der Zeichnung nicht dargestellt) ausgestaltet.

Außerdem weist die Hydraulikebene 1 im oberen Abschnitt mindestens zwei weitere Ausnehmungen 15 auf. Auch diese Ausnehmungen 15 sind jeweils horizontal ausgerichtet und senkrecht zur Längsrichtung des Grundkörpers 11 sowie auf einer gemeinsamen horizontalen Linie liegend angeordnet. Jede Ausnehmung 15 ist als Aufnahme für einen Temperatursensor ausgestaltet,

Die Montageebene 2 weist eine rechteckförmige Grundplatte 21 auf. Im unteren Abschnitt der Grundplatte 21 ist eine Vielzahl von ersten Durchgangsöffnungen 22 ausgestaltet. Die Durchgangsöffnungen 22 sind jeweils horizontal ausgerichtet und senkrecht zur Längsrichtung der Grundplatte 21 sowie jeweils paarweise vertikal übereinander liegend angeordnet. In den Durchgangsöffnungen 22 werden die Blockventile 4 lagefixiert, wobei die Anzahl und Ausführung dieser Blockventile 4 in Abhängigkeit der konkreten Befüllaufgabe wählbar ist. Die Anordnung und geometrische Form der ersten Durchgangsöffnungen 22 ist kongruent zu den im unteren Abschnitt des quaderförmigen Grundkörpers 11 der Hydraulikebene 1 ausgestalteten ersten Ausnehmungen 12.

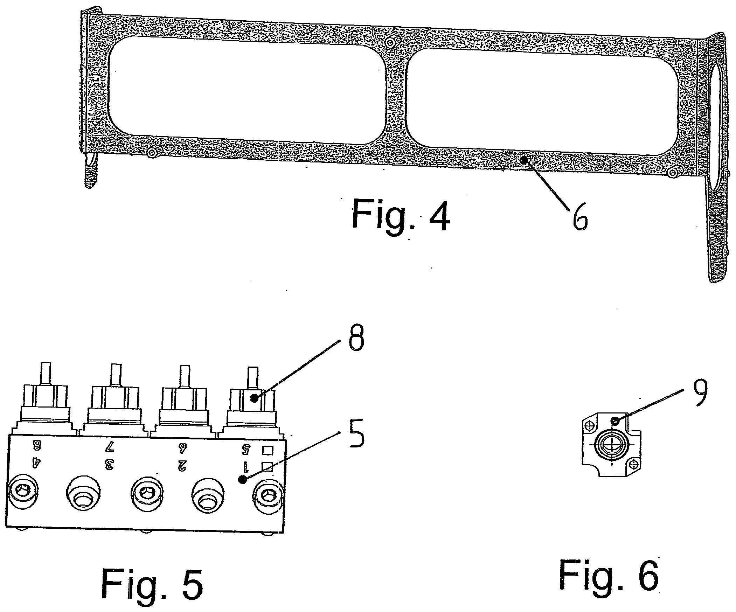

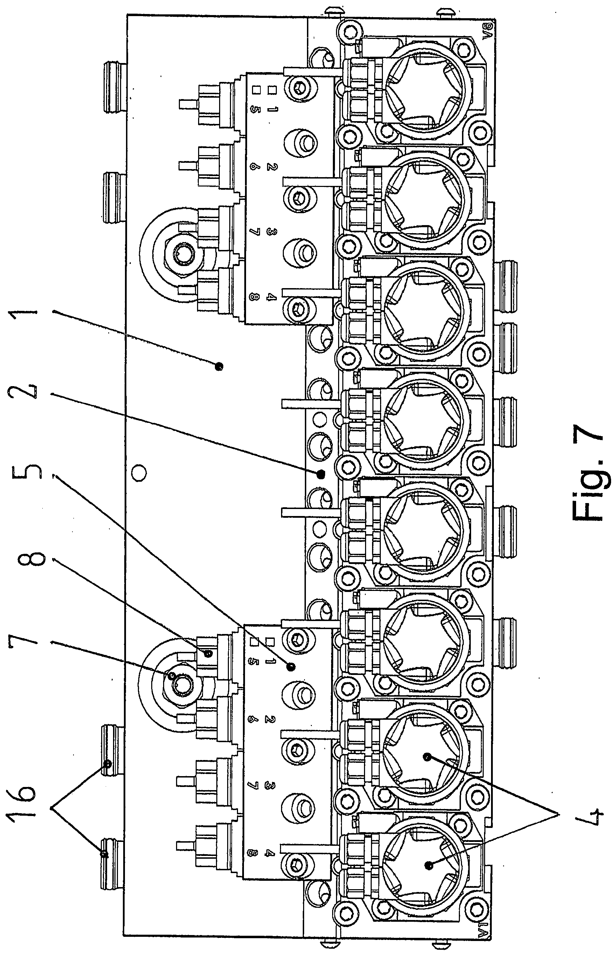

Weiterhin sind über den ersten Durchgangsöffnungen 22 mehrere zweite Durchgangsöffnungen 23 ausgestaltet. Die Anordnung und geometrische Form dieser zweiten Durchgangsöffnungen 23 ist kongruent zu den im quaderförmigen Grundkörper 11 der Hydraulikebene 1 oberhalb der ersten Ausnehmungen 12 ausgestalteten weiteren Ausnehmungen 13. Außerdem ist im oberen Abschnitt der Grundplatte 21 eine Vielzahl von dritten Durchgangsöffnungen 24 ausgestaltet. Diese dritten Durchgangsöffnungen 24 bilden in ihrer Gesamtheit ein Lochraster aus. Dieses Lochraster ist als eine Abstützung für mindestens eine Baugruppe 5 (Fig. 5) zur Aufnahme von Sensoren ausgestaltet. Durch die somit mögliche variable Anordnung von Sensoren wird auch die Sensorposition auf der Hydraulikebene 1 bestimmt, so dass eine optimale Zuordnung für den jeweils sensorisch zu erfassenden Parameter gewährleistet ist. In der in Fig. 7 dargestellten Ausführung sind zwei Baugruppen 5 zur Aufnahme von Sensoren vorgesehen, die in Durchgangsöffnungen 24 der Grundplatte 21 montiert sind. Unabhängig von der konkreten Anzahl wird vorgeschlagen, dass jede Baugruppe 5 zur Aufnahme von Sensoren mit maximal vier separaten Drucksensoren bestückt wird.

Am Umfang der jeweils paarweise vertikal übereinander liegend angeordneten ersten Durchgangsöffnungen 22 sowie am Umfang der oberhalb davon angeordneten zweiten Durchgangsöffnungen 23 an der Grundplatte 21 der Montageebene 2 sind jeweils kreisförmige Vertiefungen 25 zur Aufnahme von Dichtelementen (in der Zeichnung nicht dargestellt) ausgestaltet.

Die Elektronikebene 3 weist eine rechteckförmige Grundplatte 31 auf. In der Grundfläche der Grundplatte 31 sind Ausnehmungen und Durchgangsöffnungen 32 ausgestaltet, die jeweils horizontal ausgerichtet und senkrecht zur Längsrichtung der Grundplatte angeordnet sind. Den Ausnehmungen und Durchgangsöffnungen 32 werden Betätigungselemente für die in der Hydraulikebene 1 ausgestalteten Kanalstrukturen und die mittels der Montagebene 2 in der Hydraulikebene 1 gelagerten Blockventile 4 zugeordnet.

Die Elektronikebene 3 kann an einer separaten Halteplatte 6 montiert werden, die wiederum an den beiden seitlichen Stirnseiten der Hydraulikebene 1 befestigt wird. Eine derartige Halteplatte 6 ist in Fig. 4 als einzelne Baugruppe dargestellt, wobei die Ausgestaltung einer hierfür geeigneten Halteplatte 6 nicht auf diese Konstruktion beschränkt ist.

Eine erfindungsgemäß aufgebaute Blockstruktur kann weiter ausgestaltet werden. So können beispielsweise jedem Blockventil 4 Steckverbinder zugeordnet werden oder auch Leuchtdioden zur Anzeige von Betriebszustand bzw. Funktionsfähigkeit.

Ebenso kann die Hydraulikebene 1 an ihrer oberen und/oder an ihrer unteren Längsseite Verbindungselemente 16 aufweisen, mit denen eine erste Hydraulikebene 1 mit weiteren Hydraulikebenen zu einer gemeinsamen größeren Baueinheit zusammenfügbar ist.

### Bezugszeichenliste

1 Hydraulikebene
11 quaderförmiger Grundkörper
12 erste Ausnehmungen (für Blockventil)
13 weitere Ausnehmungen
14 Vertiefung zur Aufnahme von Dichtelementen
15 Ausnehmung für Aufnahme Temperatursensor
16 Verbindungselemente
2 Montageebene
21 rechteckförmige Grundplatte
22 erste Durchgangsöffnungen
23 zweite Durchgangsöffnungen
24 dritte Durchgangsöffnungen
25 Vertiefung zur Aufnahme von Dichtelementen
3 Elektronikebene
31 rechteckförmige Grundplatte
32 Ausnehmungen / Durchgangsöffnungen
4 Blockventil
5 Baugruppe zur Aufnahme von Sensoren
6 Halteplatte

## Patentansprüche

1. Befüllanlage zur Befüllung von Behältern von Fahrzeugen mit Betriebsstoffen an Montagelinien der Automobilindustrie, wobei die Befüllanlage spezifisch ausgestaltete Befülladapter und eine Vorrichtung mit einer Blockstruktur aufweist, wobei die flüssigen oder gasförmigen Betriebsstoffe mit den Befülladaptern den jeweils konkret zu befüllenden Behältern des Fahrzeuges zugeführt werden und wobei mehrere der für einen in der Befüllanlage örtlich und funktionell kapselbaren Prozess der Befüllung notwendigen elektronischen, elektrischen, pneumatischen und hydraulischen Baugruppen in einer gemeinsamen Blockstruktur der Vorrichtung baulich integriert sind, **dadurch gekennzeichnet, dass** die Blockstruktur eine Hydraulikebene (1), eine Montageebene (2) und eine Elektronikebene (3) aufweist, die jeweils als eine separate Baugruppe gefertigt und als eine funktionell in Wirkverbindung stehende gemeinsame Baugruppe miteinander montiert sind,
wobei die Hydraulikebene (1) einen quaderförmigen Grundkörper (11) aufweist, in dessen Innenraum die für eine jeweils konkrete Adaption spezifisch ausgebildeten Kanalstrukturen zur Führung von Betriebsstoffen ausgestaltet sind, in dessen unteren Abschnitt eine Vielzahl von ersten Ausnehmungen (12) ausgestaltet ist, die jeweils horizontal ausgerichtet und senkrecht zur Längsrichtung des Grundkörpers (11) sowie jeweils paarweise vertikal übereinander liegend angeordnet sind, wobei jede Ausnehmung (12) auf ihrem zum Innenraum des Grundkörpers (11) gerichteten Abschnitt eine Strömungsverbindung zu einer der im Innenraum ausgestalteten Kanalstrukturen aufweist, wobei jede Ausnehmung (12) auf ihrem zur Außenseite des Grundkörpers (11) gerichteten Abschnitt einen offenen Kanal als Strömungsverbindung zu einem Blockventil (4) aufweist, wobei die jeweils paarweise übereinander liegenden Ausnehmungen (12) mit jeweils einem Blockventil (4) in Wirkverbindung bringbar sind und wobei oberhalb der ersten Ausnehmungen (12) weitere Ausnehmungen (13) ausgestaltet sind zur Aufnahme von Betätigungselementen für die Kanalstrukturen und Blockventile (4),
wobei die Montageebene (2) eine rechteckförmige Grundplatte (21) aufweist, in deren unteren Abschnitt eine Vielzahl von ersten Durchgangsöffnungen (22) ausgestaltet ist, die jeweils horizontal ausgerichtet und senkrecht zur Längsrichtung der Grundplatte (21) sowie jeweils paarweise vertikal übereinander liegend angeordnet sind und deren Anordnung und geometrische Form kongruent ist zu den im unteren Abschnitt des quaderförmigen Grundkörpers (11) der Hydraulikebene (1) ausgestalteten ersten Ausnehmungen (12), wobei über diesen ersten Durchgangsöffnungen (22) mehrere zweite Durchgangsöffnungen (23) ausgestaltet sind, deren Anordnung und geometrische Form kongruent ist zu den im quaderförmigen Grundkörper (11) der Hydraulikebene (1) oberhalb der ersten Ausnehmungen (12) ausgestalteten weiteren Ausnehmungen (13) und wobei im oberen Abschnitt eine Vielzahl von dritten Durchgangsöffnungen (24) ausgestaltet ist, die in ihrer Gesamtheit ein Lochraster ausbilden,
wobei die Elektronikebene (3) eine rechteckförmige Grundplatte (31) aufweist, in deren Grundfläche Ausnehmungen und Durchgangsöffnungen (32) ausgestaltet sind, die jeweils horizontal ausgerichtet und senkrecht zur Längsrichtung der Grundplatte (31) angeordnet sind und in denen die Betätigungselemente für die in der Hydraulikebene (1) ausgestalteten Kanalstrukturen und die mittels der Montagebene (2) in der Hydraulikebene (1) gelagerten Blockventile (4) abstützbar sind.

2. Befüllanlage nach Anspruch 1, **dadurch gekennzeichnet,**
**dass** die Hydraulikebene (1) in ihrem oberen Abschnitt mindestens zwei weitere Ausnehmungen (15) aufweist, die jeweils horizontal ausgerichtet und senkrecht zur Längsrichtung des Grundkörpers (11) sowie auf einer gemeinsamen horizontalen Linie liegend angeordnet sind, wobei jede Ausnehmung (15) als eine Aufnahme für einen Temperatursensor (7) ausgestaltet ist.

3. Befüllanlage nach Anspruch 1, **dadurch gekennzeichnet,**
**dass** die im oberen Abschnitt der Montageebene (2) als Lochraster ausgebildeten dritten Durchgangsöffnungen (24) zur Abstützung von mindestens einer Baugruppe (5) zur Aufnahme von Sensoren ausgestaltet sind.

4. Befüllanlage nach Anspruch 3, **dadurch gekennzeichnet,**
**dass** jede Baugruppe (5) zur Aufnahme von Sensoren mit maximal vier separaten Drucksensoren (8) bestückbar ist.

5. Befüllanlage nach Anspruch 1, **dadurch gekennzeichnet,**
**dass** am Grundkörper (11) der Hydraulikebene (1) am Umfang der jeweils paarweise vertikal übereinander liegend angeordneten ersten Ausnehmungen (12) sowie am Umfang der oberhalb davon angeordneten weiteren Ausnehmungen (13) jeweils kreisförmige Vertiefungen (14) zur Aufnahme von Dichtelementen ausgestaltet sind.

6. Befüllanlage nach Anspruch 1, **dadurch gekennzeichnet,**
**dass** an der Grundplatte (21) der Montageebene (2) am Umfang der jeweils paarweise vertikal übereinander liegend angeordneten ersten Durchgangsöffnungen (22) sowie am Umfang der oberhalb davon angeordneten zweiten Durchgangsöffnungen (23) jeweils kreisförmige Vertiefungen (25) zur Aufnahme von Dichtelementen ausgestaltet sind.

7. Befüllanlage nach Anspruch 1, **dadurch gekennzeichnet,**
**dass** die Montagebene (2) und die Elektronikebene (3) jeweils eine gleiche Länge und eine hälftige Höhe wie die Hydraulikebene (1) aufweisen.

8. Befüllanlage nach Anspruch 1, **dadurch gekennzeichnet,**
**dass** die Montagebene (2) im unteren Abschnitt der zugeordneten Seitenfläche der Hydraulikebene (1) und die Elektronikebene (3) im oberen Abschnitt der zugeordneten Seitenfläche der Hydraulikebene (1) angeordnet ist.

9. Befüllanlage nach Anspruch 1, **dadurch gekennzeichnet,**
**dass** die Elektronikebene (3) an einer separaten Halteplatte (6) montierbar ist, die an den beiden seitlichen Stirnseiten der Hydraulikebene (1) abgestützt ist.

10. Befüllanlage nach Anspruch 1, **dadurch gekennzeichnet,**
**dass** die Hydraulikebene (1) an ihrer oberen und/oder unteren Längsseite Verbindungselemente (16) aufweist, mit denen die Hydraulikebene (1) mit weiteren Hydraulikebenen zu einer gemeinsamen größeren Baueinheit zusammenfügbar ist.

## Claims

1. A filling system for filling containers of vehicles with service fluids on assembly lines in the automotive industry, wherein the filling system has specifically designed filling adapters and a filling system with a block structure, wherein the liquid or gaseous service fluids are supplied with the filling adapters to the respective containers of the vehicle to be specifically filled and wherein multiple of the electronic, electrical, pneumatic and hydraulic assemblies required for a filling process which can be spatially and functionally encapsulated in the filling system are structurally integrated in a common block structure of the filling system, **characterized in that** the block structure has a hydraulic level (1), a mounting level (2), and an electronics level (3), which are each manufactured as a separate assembly and are assembled together as a functionally operatively connected common assembly,
wherein the hydraulic level (1) has a cuboid base body (11), in the interior of which the channel structures specifically designed for a respective concrete adaptation are formed for guiding service fluids, in the lower section of which a plurality of first recesses (12) are formed, which are each aligned horizontally and arranged perpendicularly to the longitudinal direction of the base body (11) and in each case are arranged in pairs, vertically, one above the other, wherein each recess (12) has a flow connection to one of the channel structures formed in the interior on its section directed towards the interior of the base body (11), wherein each recess (12) has an open channel as a flow connection to a block valve (4) on its section directed towards the outside of the base body (11), wherein the recesses (12), which are aligned in pairs one above the other, can each be brought into operative connection with a block valve (4), and wherein further recesses (13) are formed above the first recesses (12) for accommodating actuating elements for the channel structures and block valves (4),
wherein the mounting level (2) has a rectangular base plate (21), in the lower section of which a plurality of first through openings (22) are formed, which are each aligned horizontally and arranged perpendicularly to the longitudinal direction of the base plate (21) and are each arranged in pairs, vertically, one above the other, and the arrangement and geometric shape of which are congruent with the first recesses (12) formed in the lower section of the cuboid base body (11) of the hydraulic level (1), wherein a plurality of second through openings (23) are formed above these first through openings (22), wherein the arrangement and geometric shape of which is congruent with the further recesses (13) formed in the cuboid base body (11) of the hydraulic level (1) above the first recesses (12), and wherein a plurality of third through openings (24) are formed in the upper section, which in their entirety form a perforated grid, wherein the electronics level (3) has a rectangular base plate (31), in the base surface of which recesses and through-openings (32) are formed, which are each aligned horizontally and arranged perpendicular to the longitudinal direction of the base plate (31) and in which the actuating elements for the channel structures formed in the hydraulic level (1) and the block valves (4) mounted in the hydraulic level (1) can be supported by means of the mounting level (2).

2. The filling system according to claim 1, **characterized in that**
the hydraulic level (1) has at least two further recesses (15) in its upper section, which are each aligned horizontally and arranged perpendicular to the longitudinal direction of the base body (11) and on a common horizontal line, wherein each recess (15) is designed as a receptacle for a temperature sensor (7).

3. The filling system according to claim 1, **characterized in that**
the third through-openings (24) formed as a perforated grid in the upper section of the mounting level (2) are designed to support at least one assembly (5) to accommodate sensors.

4. The filling system according to claim 3, **characterized in that**
each assembly (5) can be fitted with a maximum of four separate pressure sensors (8) to accommodate sensors.

5. The filling system according to claim 1, **characterized in that**
circular recesses (14) for accommodating sealing elements are formed on the base body (11) of the hydraulic level (1) on the circumference of the first recesses (12), which are arranged in pairs, vertically, one above the other, and on the circumference of the further recesses (13) arranged above them.

6. The filling system according to claim 1, **characterized in that**
circular recesses (25) for accommodating sealing elements are formed on the base plate (21) of the mounting level (2) on the circumference of the first through-openings (22), which are arranged in pairs, vertically, one above the other, and on the circumference of the second through-openings (23) arranged above them.

7. The filling system according to claim 1, **characterized in that** the mounting level (2) and the electronics level (3) each have the same length, and half the height of the hydraulic level (1).

8. The filling system according to claim 1, **characterized in that**
the mounting level (2) is arranged in the lower section of the associated side surface of the hydraulic level (1), and the electronics level (3) is arranged in the upper section of the associated side surface of the hydraulic level (1).

9. The filling system according to claim 1, **characterized in that**
the electronics level (3) can be mounted on a separate retaining plate (6) which is supported on the two lateral end faces of the hydraulic level (1).

10. The filling system according to claim 1, **characterized in that**
**in that** the hydraulic level (1) has connecting elements (16) on its upper and/or lower longitudinal sides, by means of which the hydraulic level (1) can be joined together with further hydraulic levels to form a larger common structural unit.

## Revendications

1. Installation de remplissage pour le remplissage de récipients de véhicules avec des combustibles sur des lignes de montage de l'industrie automobile, l'installation de remplissage comprenant des adaptateurs de remplissage spécifiquement conçus et une installation de remplissage avec une structure en bloc, les combustibles liquides ou gazeux étant amenés à l'aide d'adaptateurs de remplissage aux récipients respectifs du véhicule à remplir concrètement et plusieurs des modules électroniques, électriques, pneumatiques et hydrauliques nécessaires pour un processus de remplissage pouvant être encapsulé localement et sur le plan fonctionnel dans l'installation de remplissage étant intégrés par construction dans une structure en bloc commune de l'installation de remplissage, **caractérisée en ce que**,
la structure en bloc présente un niveau hydraulique (1), un niveau de montage (2) et un niveau électronique (3), respectivement fabriqués en tant que sous-ensembles séparés et assemblés en tant que sous-ensemble commun en liaison fonctionnelle active,
le niveau hydraulique (1) présentant un corps de base (11) de forme parallélépipédique, dans l'espace intérieur duquel sont réalisées pour une adaptation concrète, les structures de canaux conçues spécifiquement pour la conduite des combustibles, dans la section inférieure desquels sont réalisés une pluralité de premiers évidements (12), orientés respectivement horizontalement et perpendiculairement à la direction longitudinale du corps de base (11) et superposés verticalement par paires, chaque évidement (12) présentant sur sa section orientée vers l'intérieur du corps de base (11), une liaison d'écoulement vers l'une des structures de canal réalisées à l'intérieur, chaque évidement (12) présentant sur sa section orientée vers le côté extérieur du corps de base (11), un canal ouvert conçu en tant que liaison d'écoulement vers une bloc de soupape (4), les évidements (12) superposés par paires pouvant être mis en liaison active respectivement avec un bloc de soupape (4) et dans lequel d'autres évidements (13) réalisés au-dessus des premiers évidements (12) sont destinés à recevoir des éléments d'actionnement pour les structures de canaux et les blocs de soupapes (4),
le niveau de montage (2) présentant une plaque de base rectangulaire (21) dans la section inférieure de laquelle sont réalisées une pluralité de premières ouvertures de passage (22) respectivement orientées horizontalement et disposées perpendiculairement à la direction longitudinale de la plaque de base (21) et superposées verticalement par paires et dont la disposition et la forme géométrique sont congruentes avec les premiers évidements (12) réalisés dans la section inférieure du corps de base parallélépipédique (11) du niveau hydraulique (1), plusieurs deuxièmes ouvertures de passage (23) étant aménagées au-dessus de ces premières ouvertures de passage (22), dont la disposition et la forme géométrique sont congruentes avec les autres évidements (13) aménagés dans le corps de base parallélépipédique (11) du niveau hydraulique (1) au-dessus des premiers évidements (12), et dans lequel, dans la section supérieure une pluralité de troisièmes ouvertures de passage (24) formant dans leur ensemble une trame de trous sont réalisées,
le niveau électronique (3) présentant une plaque de base rectangulaire (31) dans la surface de base de laquelle sont réalisés des évidements et des ouvertures de passage (32) respectivement orientés horizontalement et disposés perpendiculairement à la direction longitudinale de la plaque de base (31) et dans lesquels les éléments d'actionnement pour les structures de canaux réalisées dans le niveau hydraulique (1) et les blocs de soupape (4) logés dans le niveau hydraulique (1) à l'aide du niveau de montage (2) peuvent être supportés.

2. Installation de remplissage selon la revendication 1, **caractérisée en ce que**,
le niveau hydraulique (1) présente dans sa partie supérieure au moins deux autres évidements (15), orientés chacun horizontalement et disposés perpendiculairement à la direction longitudinale du corps de base (11) ainsi que sur une ligne horizontale commune, chaque évidement (15) étant conçu comme un logement pour une sonde de température (7).

3. Installation de remplissage selon la revendication 1, **caractérisée en ce que**
les troisièmes ouvertures de passage (24) réalisées sous forme de grille de trous dans la partie supérieure du niveau de montage (2) sont conçues pour supporter au moins un sous-ensemble (5) destiné à recevoir des capteurs.

4. Installation de remplissage selon la revendication 3, **caractérisée en ce que**
chaque sous-ensemble (5) destiné à recevoir des capteurs peut être équipé d'un maximum de quatre capteurs de pression (8) séparés.

5. Installation de remplissage selon la revendication 1, **caractérisée en ce que**,
sur le corps de base (11) du niveau hydraulique (1), sur la périphérie des premiers évidements (12) disposés respectivement par paires verticalement les uns au-dessus des autres ainsi que sur la périphérie des autres évidements (13) disposés au-dessus de ceux-ci, sont réalisés respectivement des renfoncements circulaires (14) pour recevoir des éléments d'étanchéité.

6. Installation de remplissage selon la revendication 1, **caractérisée en ce que**,
sur la plaque de base (21) du niveau de montage (2), sur le pourtour des premières ouvertures de passage (22) superposées verticalement par paires ainsi que sur le pourtour des deuxièmes ouvertures de passage (23) disposées au-dessus de celles-ci, sont réalisés des renfoncements circulaires (25) destinés à recevoir des éléments d'étanchéité.
deuxièmes ouvertures de passage (23) disposées au-dessus de celles-ci, sont réalisés des renfoncements circulaires (25) destinés à recevoir des éléments d'étanchéité.

7. Installation de remplissage selon la revendication 1, **caractérisée en ce que**,
le niveau de montage (2) et le niveau électronique (3) présentent chacun une longueur égale et une hauteur égale à la moitié de celle du niveau hydraulique (1).

8. Installation de remplissage selon la revendication 1, **caractérisée en ce que**,
le niveau de montage (2) est disposé dans la partie inférieure de la surface latérale associée du niveau hydraulique (1) et le niveau électronique (3) est disposé dans la partie supérieure de la surface latérale associée du niveau hydraulique (1).

9. Installation de remplissage selon la revendication 1, **caractérisée en ce que**,
le niveau électronique (3) peut être monté sur une plaque de fixation (6) séparée, qui s'appuie sur les deux faces frontales latérales du niveau hydraulique (1).

10. Installation de remplissage selon la revendication 1, **caractérisée en ce que**,
le niveau hydraulique (1) présente sur son côté longitudinal supérieur et/ou inférieur des éléments de liaison (16) avec lesquels le niveau hydraulique (1) peut être assemblé avec d'autres niveaux hydrauliques pour former une unité constructive commune plus grande.
